(19) **Europäisches Patentamt**

**European Patent Office**

**Office européen des brevets**

(11) **EP 0 685 509 B1**

(12) **EUROPEAN PATENT SPECIFICATION**

(45) Date of publication and mention
of the grant of the patent:
**28.02.2001 Bulletin 2001/09**

(21) Application number: **94902100.0**

(22) Date of filing: **10.12.1993**

(51) Int Cl.[7]: **C08J 5/18**, B32B 15/08
// C08L67:02

(86) International application number:
**PCT/JP93/01792**

(87) International publication number:
**WO 95/15993 (15.06.1995 Gazette 1995/25)**

(54) **TRANSPARENT FILM FOR LAMINATION COATING OF METALLIC CAN**

DURCHSICHTIGE FOLIE ZUR BESCHICHTUNG EINER METALLDOSE

FILM TRANSPARENT PERMETTANT DE FORMER UNE COUCHE DE REVETEMENT SUR UNE
BOITE METALLIQUE

(84) Designated Contracting States:
**DE FR GB**

(43) Date of publication of application:
**06.12.1995 Bulletin 1995/49**

(73) Proprietor: **TEIJIN LIMITED**
**Osaka-shi, Osaka 541 (JP)**

(72) Inventors:
• **MINAMIHIRA, Yukihiko**
**Sagamihara-shi, Kanagawa 229 (JP)**
• **IZUMI, Yuzuru**
**Gifu 503-01 (JP)**
• **KUBO, Kouji**
**Sagamihara-shi, Kanagawa 229 (JP)**

• **MURAKAMI, Yoji**
**Sagamihara-shi, Kanagawa 229 (JP)**
• **ONO, Tadashi**
**Yokohama-shi, Kanagawa 241 (JP)**

(74) Representative: **Votier, Sidney David et al**
**CARPMAELS & RANSFORD**
**43, Bloomsbury Square**
**London WC1A 2RA (GB)**

(56) References cited:
**WO-A-95/08442** **JP-A- 5 186 612**

Remarks:
The file contains technical information submitted
after the application was filed and not included in this
specification

**Description**

Specification

Industrial Field of the Invention

This invention relates to a transparent film to be laminated for coating onto a metal can. More specifically, it relates to a transparent film to be laminated for coating onto a metal can, which is free from white spots which generates during a retort treatment of the metal can. Particularly, it relates to a transparent film to be laminated for coating onto top and bottom ends of a metal can.

Prior Art

Metal cans for containing beverages such as coffee, tea and juice and foods are generally subjected to a retort treatment after contents are charged into the metal cans. During this treatment, the can is depressurized. Since the can may undergo deformation due to the depressurization, the metal can is made from thick tin-free steel. In terms of the ease of the production, the metal can is generally formed as a three-piece can consisting of a can body, a top end and a bottom end, or as a two-piece can consisting of a can body and an end.

Meanwhile, to prevent the corrosion of a metal can, attempts have been made to laminate and coat the surface of the metal can with a thermoplastic resin film in place of conventional coating. A polyester film, particularly a polyethylene terephthalate film, attracts much attention as such a film having well balanced characteristics. Some proposals based on this film have been made. That is,

(A) a biaxially oriented polyethylene terephthalate film is laminated on a metal plate through an adhesive layer of a polyester having a low melting point, and the resultant laminate is used as a material for making cans (JP-A-56-10451, and JP-A-1-192546).
(B) an amorphous or extremely low-crystalline aromatic polyester film is laminated on a metal plate, and the resultant laminate is used as a material for making cans (JP-A-1-92545 and JP-A-2-57339),
(C) a heat-set biaxially oriented polyethylene terephthalate film having a low orientation degree is laminated on a metal plate, and the resultant laminate is used as a material for making cans (JP-A-64-22530), and
(D) a polyester film made from a mixture of a copolyethylene terephthalate and a (co)polybutylene terephthalate is laminated onto a metal sheet and the laminate is formed into cans (EP-A-0 576 682).

Problem to Be Solved by the Invention

However, in the case of the top and bottom ends of a three-piece can having the above conventional polyester film fused thereto and laminated thereon, water drops are attached to the bottom end of the can during a retort sterilization treatment (steam treatment usually at 120 to 130°C) and the film or its surface layer which has molten and become amorphous at the time of lamination is crystallized at portions to which the water drops are attached, to generate white spots. This phenomenon is called "retort blushing" and is extremely unwelcome because it mars the appearance of the resultant product. The development of a film free from this phenomenon, particularly a film for coating the outer surfaces of the top and bottom ends of a can, is strongly desired.

Means for Solving the Problem

The inventors of the present invention have conducted intensive studies to develop a polyester film to be laminated for coating onto a metal can, which is free from the above retort blushing during a retort treatment of a metal can, and has accomplished this invention.

That is, according to the studies conducted by the inventors of the present invention, there is provided a transparent polyester film to be laminated for coating onto a metal can, which is characterized in that it is formed from a polyester composition consisting of a uniform mixture of (A) 70 to 40 % by weight of a polyethylene terephthalate (component A) having ethylene terephthalate as the main recurring unit and a melting point of 250 to 262°C and (B) 30 to 60 % by weight of a polybutylene terephthalate (component B) having butylene terephthalate as the main recurring unit and a melting point of 215 to 225°C, and in that the film has (i) a crystallization temperature in the range of 65 to 120°C, (ii) a secondary transition point of at least 40°C, and (iii) a plane orientation coefficient (measured as indicated below) in the range of 0.12 to 0.19, and in that (iv) substantially no generation of white spots is observed even after the film is fused to and laminated on a metal plate and the resultant laminate is treated by steam at 130°C for 30 minutes.

A transparent polyester film to be laminated for coating onto a metal can, provided by the present invention, is described below in more detail.

The film of the present invention is formed from a composition which consists of two kinds of polyesters as polymer components. That is, the polyester composition forming the film is a uniform mixture of a polyethylene terephthalate (component A) having ethylene terephthalate as the main recurring unit and a polybutylene terephthalate (component B) having butylene terephthalate as the main recurring unit.

The component A is a polyethylene terephthalate which has ethylene terephthalate as the main recurring unit and a melting point of 250 to 262°C, preferably 255 to 260°C. The most preferred is homopolyethylene terephthalate, but may be a copolyester so long as its melting point satisfies the above range. In the case of a copolyester, a component to be copolymerized with the polyethylene terephthalate is either an acid component other than terephthalic acid or a glycol component other than ethylene glycol.

Illustrative examples of the copolymerizable acid component include aromatic dicarboxylic acids such as isophthalic acid, phthalic acid and naphthalene dicarboxylic acid; aliphatic dicarboxylic acids such as adipic acid, azelaic acid, sebacic acid and decane dicarboxylic acid; and aliphatic dicarboxylic acids such as cyclohexane dicarboxylic acid. Among them, to improve crystallinity, a small amount of an aliphatic dicarboxylic acid such as adipic acid or sebacic acid may be used, and to adjust melting point, a small amount of an aromatic dicarboxylic acid such as isophthalic acid may be used. Illustrative examples of the copolymerizable glycol component include aliphatic diols such as butane diol and hexane diol; and aliphatic diols such as cyclohexane dimethanol. They may be used alone or in combination of two or more. These copolymerizable components are generally used in an amount of less than 3 mol%, preferably not more than 2 mol%, though it varies depending on their kinds.

When the polyethylene terephthalate as the component A has a melting point below 250°C, heat resistance of the resultant film deteriorates with the result that when the film is fused to and laminated on a metal plate, the film is molten and whitened and at the same time does not satisfy the required range to be described later of crystallization temperature of the film. The melting point of polyethylene terephthalate (homopolyester) is said to be 262°C at the highest.

On the other hand, the component B is a polybutylene terephthalate having butylene terephthalate as the main recurring unit and a melting point of 215 to 225°C, preferably 218 to 225°C. The most preferred is homopolybutylene terephthalate, but may be a copolyester so long as its melting point satisfies the above range. In the case of a copolyester, the component to be copolymerized with the polybutylene terephthalate is either an acid component other than terephthalic acid or a glycol component other than butane diol.

Illustrative examples of the copolymerizable acid component include aromatic dicarboxylic acids such as isophthalic acid, phthalic acid and naphthalene dicarboxylic acid; aliphatic dicarboxylic acids such as adipic acid, azelaic acid, sebacic acid and decane dicarboxylate; and alicyclic dicarboxylic acids such as cyclohexane dicarboxylic acid. Illustrative examples of the copolymerizable glycol component include aliphatic diols such as ethylene glycol and hexane diol; and alicyclic diols such as cyclohexane dimethanol. They may be used alone or in combination of two or more. These copolymerizable components are generally used in an amount of not more than 5 mol%, preferably not more than 3 mol%, though it varies depending on their kinds.

When the melting point of polybutylene terephthalate as the component B has a melting point below 215°C, the crystallization temperature of the resultant film does not satisfy the required range. The melting point of polybutylene terephthalate (homopolymer) is generally 225°C at the highest.

The polyethylene terephthalate (component A) and the polybutylene terephthalate (component B) as described above are not limited by their production methods. For instance, if description is made of the component A, the component A may be produced preferably by a method in which terephthalic acid, ethylene glycol and a copolymer component are subjected to an esterification reaction and then the resulting reaction product is subjected to a polycondensation reaction to obtain a polyester, or a method in which dimethyl terephthlate, ethylene glycol and a copolymer component are subjected to an ester interchange reaction and then the resulting reaction product is subjected to a polycondensation reaction to obtain a polyester. The component B can also be produced by the basically same methods as described above except that ethylene glycol is replaced by butane diol.

As for the blending ratio of the component A to the component B in the polyester composition forming the polyester film of the present invention, the proportion of the component A should be in the range of 70 to 40 % by weight, preferably 60 to 40 % by weight, and the proportion of the component B should be in the range of 30 to 60 % by weight, preferably 40 to 60 % by weight, so as to satisfy the crystallization temperature and secondary transition point of the resulting film and in consideration of laminatability of the film to a metal, heat resistance of a metal can lamination-coated with the film and prevention of generation of white spots during a retort treatment.

In the polyester composition of the present invention it is preferable to generally add a lubricant having a particle diameter of not more than 4 μm, as conventionally carried out in the production of a polyester film. The lubricant may be either organic or inorganic, while an inorganic lubricant is preferred. Illustrative examples of the inorganic lubricant include silica, alumina, titanium dioxide, calcium carbonate and barium sulfate, and illustrative examples of the organic lubricant include silicone particles. When the average particle diameter of the lubricant is too large, a pinhole starting from a coarse particle (of not less than 10 arm in diameter, for example) may be formed, or the resulting film may be ruptured during film formation in some cases,' which are undesirable. Spherical silica having an average particle diameter of not more than 1.5 µm is particularly preferred. These lubricants are preferably contained in the polyester composition in an amount of 0.01 to 1.0 % by weight.

Further, the polyester composition may contain other additives conventionally known as additives to a polyester film, such as an antioxidant, heat stabilizer, ultraviolet absorber or antistatic agent, in a suitable amount as required.

The transparent film to be laminated for coating onto a metal can, provided by the present invention, is formed from a composition in which the above polyethylene terephthalate (component A) and polybutylene terephthalate (component B) are uniformly mixed with each other. The film formed from the above composition has the following characteristic properties (i) to (iv):

(i) its crystallization temperature is in the range of 65 to 120°C, preferably 75 to 100°C,
(ii) its secondary transition point is at least 40°C,
(iii) its plane orientation coefficient is in the range of 0.12 to 0.19, and
(iv) substantially no generation of white spots is observed after the film is fused to and laminated on a metal plate and the resulting laminate is treated by steam at 130°C for 30 minutes.

When the crystallization temperature of the film of the present invention is below 65°C, film formation, particularly biaxial orientation is difficult to conduct and the film is liable to rupture. On the other hand, when the crystallization temperature is above 120°C, white spots generate in the film (a retort blushing phenomenon occurs) because the crystallization rate of the polymer is slow at the time of a retort treatment and crystals slowly grow to become big. By using a film formed from a polyester composition having a crystallization temperature in the range of 65 to 120°C, the crystallization rate of the polymer at the time of a retort treatment is increased and a large number of microcrystals are generated in the film. As the result, white spots (a retort blushing phenomenon) are significantly reduced and film formation becomes easy.

The term "a retort treatment" as used herein means a treatment of a metal can by heat or steam after the metal can is charged with contents and sealed. This treatment is generally carried out in a cannery for the purpose of sterilization. In the present invention, to check generation of white spots in the film caused by the retort treatment, a metal plate laminated with a film was maintained under steam at 130°C for 30 minutes and the result was evaluated.

Further, when the film of the present invention has a secondary transition point below 40°C, water permeates the film easily and there is the possibility of occurrence of rust in the metal plate. Moreover, stickiness may be brought about during film formation, thereby deteriorating handling property. The secondary transition point is suitably in the range of 40 to 70°C.

Further, the film of the present invention has a plane orientation coefficient (f) in the range of 0.12 to 0.19, preferably 0.135 to 0.185. When the plane orientation coefficient (f) is below 0.12, it results in a large variation in the thickness of the film and the film cannot be put to practical use in industrial production because of insufficient orientation and non-uniform drawing of the film. On the other hand, when the plane orientation coefficient is above 0.19, orientation becomes too high. Therefore, when a metal plate laminated with the film is molded into ends for a three-piece can and subjected to seam-drawing to conform to the body of the three-piece can, the film can not be stretched so that it may peel off from the metal plate or rupture.

The plane orientation coefficient (f) is defined by the following equation:

$$f = [(nX + nY) / 2] - nZ$$

wherein f is a plane orientation coefficient, nX, nY and nZ are refractive indices in the longitudinal direction, in the transverse direction and in the thickness direction of the film, respectively.

Refractive indices are measured as follows.

A polarizing plate analyzer is attached to the eyepiece side of an Abbe refractometer to measure respective refractive indices with a monochlomatric NaD ray. Methylene iodide is used as a mounting liquid and measurement temperature is set at 25°C.

To fuse and laminate the film of the present invention on a metal plate, there is advantageously employed a method in which the metal plate is heated to a temperature near the melting point of the polyethylene terephthalate (component A) and laminated with the film, the resultant laminate is rapidly cooled, and at least one surface layer (thin film) of the film, which comes in contact with the metal plate, is caused to be molten, amorphous and fused. When the metal plate laminated with the film is subjected to a retort treatment at 130°C for 30 minutes, white spots should not substantially generate. The white spots not only mar the appearance of the metal can but also lower the rust prevention effect of the transparent film to be laminated for coating onto a metal can because voids are generated at the white spots.

Further, the film of the present invention has two crystal dissolution peak temperatures (melting points). That is, there are a high peak temperature attributable to the component A and a low peak temperature attributable to the component B. The high peak temperature (melting point) is suitably at least 248°C, preferably at least 250°C. The film thus having two peak temperatures means that an ester interchange reaction between the component A and the component B does not substantially take place. When the high peak temperature is below 248°C, an ester interchange reaction occurs and copolymerization proceeds with the result that the crystallization temperature of the film rises and white spots are liable to generate during a retort treatment.

It is desired that the film of the present invention should have a semi-crystallization time at 130°C of not more than 90 seconds, preferably not more than 40 seconds.

When the semi-crystallization time is above 90 seconds, there occur differences in crystallization time at portions to which water drops are attached during a retort treatment and white spots are liable to generate in the film fused to the metal plate. When the semi-crystallization time is not more than 90 seconds, the crystallization rate of the polymer is very fast at the time of a retort treatment and a large number of microcrystals are generated in the film. As the result, white spots (a retort blushing phenomenon) are significantly reduced.

Here, semi-crystallization time (half of crystallization time) was measured using a MK-701, a polymer crystallization rate measuring instrument manufactured by Kotaki Seisakusho Ltd. Immediately after the obtained film was maintained at 290°C for 3 minutes to be molten, the semi-crystallization time of the film was determined in a conventional manner according to a depolarization light intensity method at a predetermined temperature (130°C).

The transparent film of the present invention has a thickness of 6 to 30 μm, preferably 10 to 25 μm. The film can be produced from the polyester composition of the invention by a known method. That is, in accordance with a conventional method, the polyester composition is melt-extruded from a melt extrusion die to be molded into a film, the film is biaxially drawn and thermally set to obtain a biaxially oriented film. In this case, an area draw ratio is preferably at least 9 times, and the resulting biaxially oriented film is preferably of a balanced type.

The film of the present invention is used as a transparent film to be laminated for coating onto a metal can. Further, the film is suitably used for top and bottom ends of a metal can, particularly used for lamination-coating the outer surfaces of the top and bottom ends.

Examples

The present invention will be specifically illustrated with reference to the following examples.

The melting point of the polyester composition in Examples was measured by elevating temperature at a rate of 20°C/minute and obtaining a fusion peak, using Du Pont Instruments 910DSC. Crystallization temperature and secondary transition point were measured by elevating the temperature at a rate of 20°C/minute, maintaining the film at 290°C for 3 minutes, rapidly cooling the film, and elevating the temperature again at a rate of 20°C/minute to obtain a crystallization peak and a transition point. The amount of a sample was about 15 mg.

Example 1

A polyester composition was prepared by mixing 50 % by weight of a polyethylene terephthalate (component A) containing spherical silica having an average particle diameter of 1.5 μm and having a melting point of 258°C with 50 % by weight of a polybutylene terephthalate (component B) having a melting point of 223°C. The polyester composition was melt-extruded at 280°C, rapidly cooled to solidify to obtain an unstretched film. Thereafter, the unstretched film was stretched to 3.5 times in the longitudinal direction at a temperature of 60°C and then stretched to 3.6 times in the transverse direction at a temperature of 60°C. Subsequently, the film was thermally set at a temperature of 180°C to obtain a biaxially oriented polyester film having a plane orientation coefficient of 0.156 and a thickness of 12 μm. The film had a secondary transition point (Tg) of 49°C and a crystallization temperature (Tcc) of 85°C. The thus obtained biaxially oriented film was pressed against tin-free steel (having a thickness of 250 μm) heated at 255°C with a roll heated at 200°C to laminate on the steel therewith. The resulting laminate was then rapidly cooled to obtain a film-laminated metal plate. Ends for a three-piece can were molded from the film-laminated metal plate and subjected to a retort treatment for evaluation. As the result, no generation of white spots were found. Results are shown as Example 1 in No.4 of Table 1.

Retort blushing caused by the retort treatment was evaluated according to the following method.

A film-laminated metal plate was treated by steam at 130°C for 30 minutes and changes in its appearance were observed with naked eyes.

5　no changes in appearance
4　slightly dim appearance

3  dim appearance, but can be used
2  generation of white spots (blushing)
1  generation of white spots and rough surface

The film formability of the composition is evaluated as O when a film sample is obtained continuously, and as X when the film is ruptured even by varying drawing conditions and a film sample of more than 300 m in length cannot be obtained.

Comparative Example 1

The procedure of Example 1 was repeated except that 80 % by weight of the polyethylene terephthalate as component A and 20 % by weight of the polybutylene terephthalate as component B were used and stretch temperatures in the longitudinal and transverse directions were set at 90°C so as to produce a film having an area orientation coefficient of 0.15 to 0.17, laminate it on a metal plate and evaluate a retort treatment.

The film had a secondary transition point (Tg) of 65°C and a crystallization temperature (Tcc) of 128°C, and white spots and a rough surface were observed in the film laminated on the metal plate, thus remarkably impairing the appearance of the metal plate. Results are shown in No.1 of Table 1.

Comparative Example 2

The procedure of Example 1 was repeated except that 35 % by weight of the component A and 65 % by weight of the component B were used to obtain an unstretched film. The unstretched film was subjected to sequential biaxial orientations in the same manner as in Example 1 by changing stretch temperature and stretch ratio for studying, but the film often ruptured at the time of the stretching in the transverse direction and hence, a continuous film sample could not be obtained. A film cut sample had a secondary transition point (Tg) of 35°C and a crystallization temperature (Tcc) of 58°C. Results are shown in No.6 of Table 1.

Examples 2 to 4

The procedure of Example 1 was repeated to prepare films except that the blending ratio of the component A to the component B was changed to 70:30, 60:40 and 40:60, and stretch temperatures in the longitudinal and transverse directions were adjusted at a temperature in the range of higher than Tg and lower than Tcc so that plane orientation coefficients became values shown in Table 1. The thus obtained films were laminated on metal plates and evaluated for retort treatments. Results are shown in Nos.2, 3 and 5 of Table 1. No white spots were observed in any of them.

Example 5 and Comparative Example 3

The procedure of Example 2 was repeated except that polyethylene terephthalates having melting points of 255°C and 245°C and containing 1 mol% and 5 mol% of isophthalic acid as an acid component were used in place of the polyethylene terephthalate as the component A. Results are shown in Nos. 7 and 8 of Table 1. No white spots was observed in Example 5, but white spots generated in Comparative Example 3.

Examples 6 and 7, and Comparative Example 4

The procedure of Example 2 was repeated except that polybutylene terephthalates having melting points of 220°C, 218°C and 208°C were used in place of the polybutylene terephthalate as the component B. Results are shown in Nos. 9, 10 and 11 of Table 1. There was no problem in Examples 6 and 7, but white spots generated in Comparative Example 4.

Examples 8 and 9

The film of Example 1 had two melting points of 214°C and 253°C.

In Example 1, resin temperature at the time of melt extrusion was changed from 280°C to 300°C and 315°C to perform Examples 8 and 9. Results are shown in Table 2. It was found that a higher peak temperature was apt to lower, a crystallization temperature to rise, and retort blushing to worse slightly.

Table 1

| | | Polyethylene terephthalate (A) | | Polybutylene terephthalate (B) | | Film form-ability | Plane orientation coefficient | Semi-crystallization temp. (sec.) | Higher peak temp. (melting point) (°C) | DSC measurement | | Evaluation on retort treatment |
|---|---|---|---|---|---|---|---|---|---|---|---|---|
| | | Melting point (°C) | Blending ratio (wt.%) | Melting point (°C) | Blending ratio (wt.%) | | | | | Secondary transition point (°C) | Crystallization temp. (°C) | |
| 1 | Comp. Ex. 1 | 258 | 80 | 223 | 20 | ○ | 0.158 | 100 | 254 | 65 | 128 | 1 |
| 2 | Ex. 2 | 258 | 70 | 223 | 30 | ○ | 0.153 | 45 | 253 | 57 | 115 | 4 |
| 3 | Ex. 3 | 258 | 60 | 223 | 40 | ○ | 0.167 | 20 | 252 | 53 | 100 | 4 |
| 4 | Ex. 1 | 258 | 50 | 223 | 50 | ○ | 0.156 | 15 | 252 | 49 | 85 | 5 |
| 5 | Ex. 4 | 258 | 40 | 223 | 60 | ○ | 0.153 | 8 | 250 | 40 | 65 | 5 |
| 6 | Comp. Ex. 2 | 258 | 35 | 223 | 65 | x | − | 5 | 249 | 35 | 58 | − |
| 7 | Ex. 5 | 255 | 70 | 223 | 30 | ○ | 0.155 | 70 | 251 | 57 | 119 | 3 |
| 8 | Comp. Ex. 3 | 245 | 70 | 223 | 30 | ○ | 0.158 | 110 | 241 | 57 | 140 | 1 |
| 9 | Ex. 6 | 258 | 70 | 220 | 30 | ○ | 0.155 | 70 | 250 | 57 | 118 | 4 |
| 10 | Ex. 7 | 258 | 70 | 218 | 30 | ○ | 0.151 | 75 | 248 | 57 | 120 | 3 |
| 11 | Comp. Ex. 4 | 258 | 70 | 208 | 30 | ○ | 0.145 | 105 | 238 | 57 | 130 | 1 |

Comp. Ex. = Comparative Example,  Ex. = Example

EP 0 685 509 B1

Table 2

| | Melt-extruded resin temperature (°C) | DSC measurement | | | | Evaluation on retort treatment |
|---|---|---|---|---|---|---|
| | | Tm1 | Tm2 | Secondary transition point | Crystallization temperature | |
| Example 1 | 280 | 214 | 253 | 47 | 85 | 5 |
| Example 8 | 300 | 212 | 249 | 53 | 95 | 4 |
| Example 9 | 315 | 210 | 246 | 52 | 120 | 3 |

Tml; Lower peak temperature
Tm2; Higher peak temperature

**Claims**

1. A transparent polyester film to be laminated for coating onto a metal can, characterized in that it is formed from a polyester composition consisting of a uniform mixture of (A) 70 to 40 % by weight of a polyethylene terephthalate (component A) having ethylene terephthalate as the main recurring unit and a melting point of 250 to 262°C and (B) 30 to 60 % by weight of a polybutylene terephthalate (component B) having butylene terephthalate as the main

## EP 0 685 509 B1

recurring unit and a melting point of 215 to 225°C, and in that the film has (i) a crystallization temperature in the range of 65 to 120°C, (ii) a secondary transition point of at least 40°C, and (iii) a plane orientation coefficient (measured as indicated in the description) in the range of 0.12 to 0.19, and in that (iv) substantially no generation of white spots is observed after the film is fused and laminated on a metal plate and the resulting laminate is treated by steam at 130°C for 30 minutes.

2. The polyester film of claim 1, wherein the film has two crystal dissolution peak temperatures (melting points) and its higher peak temperature is at least 248°C.

3. The polyester film of claim 1 or 2, wherein the film has a semi-crystallization time at 130°C of not more than 90 seconds.

4. The polyester film of any one of claims 1 to 3, wherein the component A is a polyethylene terephthalate having a melting point of 255 to 260°C.

5. The polyester film of any one of claims 1 to 4, wherein the component B is a polybutylene terephthalate having a melting point of 218 to 224°C.

6. The polyester film of any one of claims 1 to 5, wherein the polyester composition is a uniform mixture consisting of 60 to 40 % by weight of the component A and 40 to 60 % by weight of the component B.

7. The polyester film of any one of claims 1 to 6, wherein the film has a crystallization temperature of 75 to 95°C.

8. The polyester film of any one of claims 1 to 7, wherein the film has a plane orientation coefficient of 0.135 to 0.185.

9. The polyester film of any one of claims 1 to 8, wherein the film has a thickness of 6 to 30 μm.

10. Use of the polyester film of claim 1 as a film to be laminated for coating onto a metal can.

11. Use as claimed in claim 10 wherein the film is to be laminated for coating onto an end of a metal can.


**Patentansprüche**

1. Transparenter Polyesterfilm zur Laminierung für eine Beschichtung auf eine Metallbüchse, dadurch gekennzeichnet, daß er aus einer Polyesterzusammensetzung gebildet ist, bestehend aus einem einheitlichen Gemisch von (A) 70 bis 40 Gew.-% eines Polyethylenterephthalats (Komponente A) mit Ethylenterephthalat als der wiederkehrenden Haupteinheit und mit einem Schmelzpunkt von 250 bis 262°C und (B) 30 bis 60 Gew.-% eines Polybutylenterephthalats (Komponente B) mit Butylenterephthalat als der wiederkehrenden Haupteinheit und mit einem Schmelzpunkt von 215 bis 225°C, und daß der Film (i) eine Kristallisationstemperatur in dem Bereich von 65 bis 120°C, (ii) einen zweiten Übergangspunkt von mindestens 40°C und (iii) einen Flächenorientierungskoeffizienten, der wie in der Beschreibung angeführt gemessen wird, in dem Bereich von 0,12 bis 0,19 aufweist, und daß (iv) im wesentlichen keine Erzeugung von weißen Punkten beobachtet wird, nachdem der Film geschmolzen und auf eine Metallbüchse laminiert wird und das resultierende Laminat mit Dampf bei 130°C für 30 Minuten behandelt wird.

2. Polyesterfilm nach Anspruch 1, wobei der Film zwei Kristallauflösungspeaktemperaturen (Schmelzpunkte) aufweist und deren höhere Peaktemperatur mindestens 248°C beträgt.

3. Polyesterfilm nach Anspruch 1 oder 2, wobei der Film eine Semi-Kristallisationszeit bei 130°C von nicht mehr als 90 Sekunden aufweist.

4. Polyesterfilm nach einem der Ansprüche 1 bis 3, wobei die Komponente A ein Polyethylenterephthalat mit einem Schmelzpunkt von 255 bis 260°C ist.

5. Polyesterfilm nach einem der Ansprüche 1 bis 4, wobei die Komponente B ein Polybutylenterephthalat mit einem Schmelzpunkt von 218 bis 224°C ist.

6. Polyesterfilm nach einem der Ansprüche 1 bis 5, wobei die Polyesterzusammensetzung ein einheitliches Gemisch ist, bestehend aus 60 bis 40 Gew.-% der Komponente A und 40 bis 60 Gew.-% der Komponente B.

7. Polyesterfilm nach einem der Ansprüche 1 bis 6, wobei der Film eine Kristallisationstemperatur von 75 bis 95°C aufweist.

8. Polyesterfilm nach einem der Ansprüche 1 bis 7, wobei der Film einen Flächenorientierungskoeffizienten von 0,135 bis 0,185 aufweist.

9. Polyesterfilm nach einem der Ansprüche 1 bis 8, wobei der Film eine Dicke von 6 bis 30 um aufweist.

10. Verwendung des Polyesterfilms nach Anspruch 1 als ein Film zur Laminierung für eine Beschichtung auf eine Metallbüchse.

11. Verwendung nach Anspruch 10, wobei der Film zur Laminierung für eine Beschichtung auf ein Ende einer Metallbüchse ist.


**Revendications**

1. Film de polyester transparent devant être stratifié pour former un revêtement sur une boîte métallique, caractérisé en ce qu'il est formé à partir d'une composition de polyester constituée d'un mélange uniforme de (A) 70 à 40 % en poids d'un poly(téréphtalate d'éthylène) (composant A) dont le motif récurrent principal est le téréphtalate d'éthylène et ayant un point de fusion de 250 à 262°C, et de (B) 30 à 60 % en poids d'un poly(téréphtalate de butylène) (composant B) dont le motif récurrent principal est le téréphtalate de butylène et ayant un point de fusion de 215 à 225°C, et en ce que le film a (i) une température de cristallisation située dans la plage allant de 65 à 120°C, (ii) un point de transition secondaire d'au moins 40°C, et (iii) un coefficient d'orientation dans le plan (mesuré comme indiqué dans la description) situé dans la plage allant de 0,12 à 0,19, et en ce que (iv) on n'observe pratiquement pas de production de points blancs après fusion et stratification du film sur une plaque métallique et après que le stratifié résultant a été traité à la vapeur d'eau à 130°C pendant 30 minutes.

2. Film de polyester selon la revendication 1, dans lequel le film a deux températures de pic de dissolution cristalline (points de fusion) et sa température de pic supérieure est d'au moins 248°C.

3. Film de polyester selon la revendication 1 ou 2, dans lequel le film a un temps de semi-cristallisation à 130°C non supérieur à 90 secondes.

4. Film de polyester selon l'une quelconque des revendications 1 à 3, dans lequel le composant A est un poly(téréphtalate d'éthylène) ayant un point de fusion de 255 à 260°C.

5. Film de polyester selon l'une quelconque des revendications 1 à 4, dans lequel le composant B est un poly(téréphtalate de butylène) ayant un point de fusion de 218 à 224°C.

6. Film de polyester selon l'une quelconque des revendications 1 à 5, dans lequel la composition de polyester est un mélange uniforme constitué de 60 à 40 % en poids du composant A et de 40 à 60 % en poids du composant B.

7. Film de polyester selon l'une quelconque des revendications 1 à 6, dans lequel le film a une température de cristallisation de 75 à 95°C.

8. Film de polyester selon l'une quelconque des revendications 1 à 7, dans lequel le film a un coefficient d'orientation dans le plan de 0,135 à 0,185.

9. Film de polyester selon l'une quelconque des revendications 1 à 8, dans lequel le film a une épaisseur de 6 à 30 $\mu$m.

10. Utilisation du film de polyester de la revendication 1 en tant que film devant être stratifié pour former un revêtement sur une boîte métallique.

11. Utilisation selon la revendication 10, dans lequel le film doit être stratifié pour former un revêtement sur une extrémité d'une boîte métallique.